# EUROPEAN PATENT SPECIFICATION

(11) **EP 0 283 180 B1**
(45) Date of publication and mention of the grant of the patent: **22.06.1994**
(21) Application number: 88301953.1
(22) Date of filing: 07.03.1988
(51) Int. Cl.: C08F 8/28, C08J 5/18

(54) **Water soluble packaging film**
Wasserlösliche Verpackungsfolie
Film d'emballage soluble dans l'eau

(30) Priority: 09.03.1987 JP 52037/87
(43) Date of publication of application: 21.09.1988
(73) Proprietor: AICELLO CHEMICAL COMPANY LIMITED, Toyohashi-shi, Aichi-ken 441-11 (JP)
(72) Inventor: Matsumoto, Takayuki, Toyohashi-shi Aichi-ken (JP); Suzuki, Tsutomu, Toyohashi-shi Aichi-ken (JP); Tsukamoto, Yoshinori, Toyohashi-shi Aichi-ken (JP); Nakamura, Hitoshi, Hoi-gun Aichi-ken (JP)
(74) Representative: Stuart, Ian Alexander

(56) References cited:
- CH-A- 357 629
- DE-A- 643 650
- DE-A- 1 200 471
- FR-A- 889 056

## Description

This invention relates to a water soluble packaging film based on polyvinyl alcohol, and more particularly to a water soluble packaging film which is suitable for use as a packaging film of alkaline or acidic materials such as soaps, laundry detergents, bleaching agents, agrochemicals and industrial chemicals.

### Description of the Prior Art

Polyvinyl alcohol (hereinafter abbreviated as PVA) is generally soluble in cold water when the degree of hydrolysis is in the range of 80 - 90 mole %. However, it is well known that PVA becomes insoluble in cold water when the degree of hydrolysis exceeds 90 mole %. Besides there is a problem in packaging alkaline materials such as soaps or acidic chemicals such as aluminium sulfate therein, even if PVA in the film has a degree of hydrolysis of 80 - 90 mole %. In such cases, hydrolysis reaction of PVA proceeds during the storage with the passage of time, and cold water solubility of the film is lost when the degree of hydrolysis exceeds 90 mole %.

Therefore it has practically been impossible to use PVA based water soluble films for packaging the aforesaid chemicals. Consequently packaging films are required which exhibit stable water solubility independently of the alkaline and acidic chemicals. In addition, a film which can be removed at the development stage by dissolving in an alkaline or acidic solution is desired for the application to surface protecting films of photosensitive dry film resists developed in the alkaline or acidic solution.

DE-A-643 650 discloses water-soluble acetals of PVA and benzaldehyde sulfonic acids, suitable for use as adhesives or sizing agents.

DE-B-1 200 471 discloses acetal films as intermediates in the production of fibres, the films being water-soluble and formed from PVA and an aldehyde containing a sulfonic acid group.

The present invention has been carried out in consideration of problems on the packaging films prepared by using above mentioned PVA based water soluble films as well as on the insolubilization of PVA in cold water by exceeding the hydrolysis degree of 90 mole %.

Embodiments of this invention may provide a water soluble film which exhibits good water solubility even though the hydrolysis degree of PVA is more than 90 mole %.

Embodiments of this invention may provide a water soluble packaging film containing an acetalised product of PVA which can maintain the cold water solubility of film even if the degree of hydrolysis exceeds 90 mole % and increases with the lapse of time during use as the above stated packaging films.

The present invention is a water soluble packaging film consisting essentially of an acetalized product having an acetalisation degree of 1-30 mole % resulting from partial acetalisation of polyvinyl alcohol having a degree of hydrolysis of not less than 90 mole % by using a benzaldehyde derivative of the formula (I): 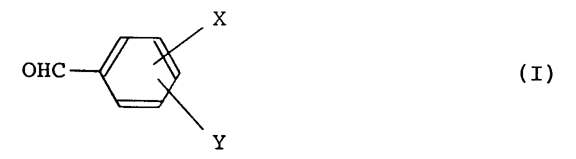
wherein X is a sulfonic acid group or a sulfonic acid salt group and Y represents one member selected from a hydrogen atom, sulfonic acid groups, sulfonic acid salt groups, halogen atom, alkyl groups and hydroxy groups.

The water soluble film of this invention contains, as stated above, a predominant amount of the acetalized product resulting from the acetalization of PVA by using the benzaldehyde derivative of the formula (I). Both partially and completely hydrolyzed PVA can be used in this invention and the hydrolysis degree of PVA is notless than 90 mole %.

The benzaldehyde derivative used for the acetalization of such PVA includes, for example, 2-benzaldehyde sulfonic acid and its salt (for example, sodium salt), 2,4-benzaldehyde-disulfonic acid sodium salt, 4-chlorobenzaldehyde-2-sulfonic acid sodium salt, 4-methylbenzaldehyde-2-sulfonic acid sodium salt and 4-hydroxybenzaldehyde-2-sulfonic acid sodium salt.

In order to carry out the acetalization of PVA, the aforesaid benzaldehyde derivative is added to an aqueous solution or dispersion of PVA. The reaction is generally conducted with stirring and warming, for example, to about 70°C in the presence of a catalyst e.g. an inorganic acid such as phosphoric acid, hydrochloric acid, sulfuric acid etc. or an organic acid such as oxalic acid, acecic acid, citric acid etc. Thereafter the reaction may be continued at room temperature. The resulting reaction mixture is neutralized and added dropwise to a large amount of acetone to reprecipitate the acetalized PVA thus formed. The acetalized product of PVA obtained is controlled to have an acetalization degree of 1 - 30 mole %. It should be noted that the water solubility of acetalized PVA becomes no good when the degree of acetalization is less than 1 mole % or more than 30 mole %. That is, in order to provide the good water solubility for PVA having a hydrolysis degree of 90 mole % and more, the range of acetalization is not less than 1 mole % and not more than 30 mole %.

Film forming process is industrially conducted for preparing films from acetalized PVA thus obtained. In this process, the aqueous solution of acetalized PVA is cast from a nozzle onto the surface of a drum dryer or a endless belt. After drying and solidifying the solution, the resulting film is separated from the surface of dryer or endless belt.

Besides in this invention, mechanical properties and processing ability of the film prepared from the acetalized product of PVA can be improved by the addition of auxiliary agents. That is, above mentioned acetalized product is previously mixed with polyhydric alcohols such as glycerol, surface active agents, dyestuffs, pigments and anti-blocking agents such as fine powder.

The film containing a predominant amount of the acetalized PVA thus obtained exhibits good solubility in cold water even though the hydrolysis degree of PVA itself is 90 mole % and more. Simultaneously the film has a good solubility in aqueous solutions of alkali, acid and salt. Furthermore, when the film is used for the packaging of alkaline or acidic materials, the water solubility of film is not damaged by increase in the hydrolysis degree of PVA with the passage of time during the storage of these materials. In this connection, the dissolving mechanism of such film is not clear at the present time. It, however, is assumed that introduction of benzene rings having a high steric hindrance into PVA inhibits formation of inter- and intra-molecular hydrogen bonds of PVA even if PVA of high hydrolysis degree is used, and hydrophilic groups substituted on benzene rings result in good solubility in cold water.

Therefore the water soluble film of this invention can be used for the packaging of various alkaline and acidic chemicals such as soaps, detergents, bleaching agents, agricultural chemicals, industrial chemicals and the like. The film is very useful as the packaging film suitable for applying the intact package of these materials when these materials are used by dissolving in water.

### Examples

The present invention and its beneficial effect will hereinafter be illustrated in detail with respect to the examples.

### Example 1

To a solution of 75 g of PVA having a hydrolysis degree of 98.5 mole % and an average degree of polymerization of 1000 (Shin-Etsu PVA C-10, a product of Shin-Etsu Chemical Co.) in 425 g of warm water was added 14.2 g of 2-benzaldehyde sulfonic acid sodium salt and 3.3 g of 85% phosphoric acid as a catalyst. The mixture was stirred at 70°C for 5 hours and further reacted for 20 hours at the room temperature. The resulting reaction mixture was neutralized and added dropwise to a large amount of acetone to reprecipitate the acetalized product of PVA formed. The acetalization degree of the product obtained was 7.7 mole %.

The resultant acetalized product was dissolved in water, cast on a glass plate and dried at about 80°C to prepare a film having a thickness of 30 ». The film was completely dissolved by dipping in water at 20°C for about 30 seconds with stirring.

Besides the films thus obtained were buried in sodium carbonate powder and aluminium sulfate powder respectively, and allowed to stand at 40°C for 2 months. Then the dissolution time in water was measured at 20°C by the same procedure. The films were dissolved after 30 seconds respectively and found to maintain the initial solubility in water.

In this connection, the dissolution time was measured according to the following procedures.

A 1 liter beaker is charged with 800 ml of water at 20°C and stirred with a magnetic stirrer so that the water vortex has a depth of 20 - 25 mm at the center. The film specimen is supported by interposing between slide mounts for 35 mm photographic films. The mounts are suspended with a thread and dipped into the water so as to be parallel to the beaker wall. The time until the complete dissolution of film due to dispersion is measured.

### Example 2

The same procedures as described in Example 1 were carried out in the acetalizing reaction by using PVA having a hydrolysis degree of 99.5 (Shin-Etsu PVA SN, a product of Shin-Etsu Chemical Co.) mole % and an average degree of polymerization of 1700 together with 2,4-benzaldehydedisulfonic acid sodium salt. The acetalized PVA thus obtained had an acetalization degree of 9.6 mole %.

A mixture of 100 parts by weight of the acetalized PVA with 15 parts by weight of glycerol was dissolved in water and cast to prepare a film having a thickness of 30 ». The dissolution time of the film obtained was about 15 seconds in water at 20°C.

In addition, bags were prepared with the film. Sodium carbonate powder and aluminium sulfate powder were packed respectively in these bags and allowed to stand at 40°C for 2 months. Then the dissolution time of the bags were measured in water at 20°C. Both bags had the same dissolution time of about 15 seconds.

### Example 3

The same procedures as described in Example 1 were carried out by using PVA having a hydrolysis degree of 98.5 mole % and an average degree of polymerization of 600 (Poval 105®, a product of Kuraray Co.) together with 4-chlorobenzaldehyde-2-sulfonic acid sodium salt. The acetalized PVA obtained had an acetalization degree of 10.3 mole %.

The films prepared from the resulting acetalized PVA by the same procedures had a dissolution time of about 20 seconds at 20°C in water.

Besides the films were buried respectively in sodium carbonate powder and aluminium sulfate powder. After standing at 40°C for 2 months, both films had the same dissolution time in water as above.

### Example 4

To a solution of 90 g of PVA having a hydrolysis degree of 99.0 mole % and an average polymerization degree of 1100 (Gosenol NM-11®, a product of The Nippon Synthetic Chemical Co. ) in 410 g of warm water was added 13.0 g of 4-hydroxybenzaldehyde-2-sulfonic acid sodium salt and 10 g of 50% aqueous citric acid solution as a catalyst. The mixture was stirred at 70°C for 8 hours and further reacted for 20 hours at the room temperature. The resulting reaction mixture was neutralized and added dropwise to a large amount of methanol to reprecipitate the acetalized product of PVA formed. The acetalization degree of the product obtained was 5.2 mole %.

A mixture of 100 parts by weight of the acetalized product with 18 parts by weight of sorbitol was dissolved in water and cast to prepare a film having a thickness of 50 ». The dissolution time of the film obtained was about 40 seconds in water at 20°C.

In addition, a small bag having dimensions of 30 x 30 mm was prepared with the film. The bag was packed with 3 g of laundry detergent powder mainly consisting of straight-chain alkylbenzenesulfonic acid sodium salt, sodium carbonate and sodium sulfate. After standing for 6 months at the room temperature, the packed small bag having the content within was dissolved in 300 ml of water with stirring at 20°C. The bag was completely dissolved within a minute.

### Example 5

To a solution of 60 g of PVA having a hydrolysis degree of 97.5 mole % and an average polymerization degree of 2200 (Gosenol AH-22®, a product of The Nippon Synthetic Chemical Co.) in 440 g of warm water was added 18.0 g of 4-methylbenzaldehyde-2-sulfonic acid sodium salt and 4 g of 20% aqueous sulfuric acid solution as a catalyst. The mixture was stirred at 50°C for 5 hours and further reacted for 10 hours at the room temperature. The resulting reaction mixture was neutralized and added to a large amount of methanol to reprecipitate the acetalized product of PVA formed. The acetalization degree of the product obtained was 12.1 mole %.

A mixture of 100 parts by weight of the acetalized product with 20 parts by weight of triethylene glycol was dissolved in water and cast to prepare a film having a thickness of 25 ». The dissolution time of the film obtained was about 25 seconds in water at 20°C.

In addition, a small bag having dimensions of 30 x 30 mm was prepared with the film, and packed with 3 g of maleic anhydride powder. After standing for 6 months at the room temperature, the packed small bag having the content within was dissolved in 300 ml of water with stirring at 20°C. The bag was completely dissolved during 40 seconds.

In the next step, a comparative example will hereinafter be illustrated by using a PVA film without acetalization. Other comparative examples will also be illustrated by using films of acetalized products resulting from the acetalization of benzaldehyde and its derivative which are different from those used in this invention.

### Comparative example 1

An aqueous solution of PVA having a hydrolysis degree of 88 mole % and an average polymerization degree of 1000 was cast to prepare a film having a thickness of 30 ». The dissolution time of the film was about 30 seconds in water at 20°C.

The films thus obtained were buried in sodium carbonate powder and aluminium sulfate powder respectively, and allowed to stand at 40°C for 2 months. The dissolution time of resulting films was measured. These films did not dissolve in water at 20°C.

### Comparative example 2

Benzaldehyde was reacted with PVA having a hydrolysis degree of 98.5 mole % and an average polymerization degree of 1000 by the same procedures as described in Example 1 to obtain an acetalized product of PVA having an acetalization degree of 7.4 mole %.

The acetalized product was dissolved in hot water and cast to prepare a film having a thickness of 30 ». The dissolution time of the film was measured in water at 20°C. The film was decomposed into small pieces, but did not dissolve completely.

### Comparative example 3

2-Hydroxybenzaldehyde was reacted with PVA having a hydrolysis degree of 99 mole % and an average polymerization degree of 1700 by the same procedures as described in Example 1 to obtain an acetalized product of PVA having an acetalization degree of 8.8 mole %. A film having a thickness of 30 » was prepared from the acetalized product and the dissolution time was measured in water. The film did not dissolve in water at 20°C.

## Claims

1. A water soluble packaging film consisting essentially of an acetalized product having a degree of acetalization of 1-30 mole % resulting from partial acetalization of polyvinyl alcohol having a degree of hydrolysis of not less than 90 mole % by using a benzaldehyde derivative of the formula (1): 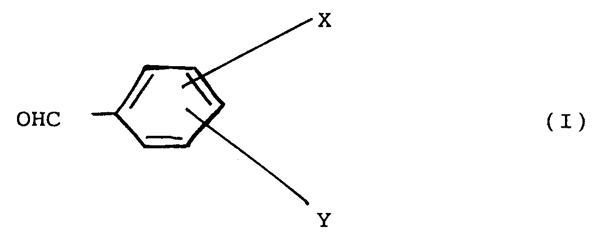 wherein X is a sulfonic acid group or a sulfonic acid salt group and Y represents one member selected from a hydrogen atom,sulfonic acid groups, sulfonic acid salt groups, a halogen atom, alkyl groups and hydroxy groups.

2. A packaging film according to claim 1 wherein the benzaldehyde derivative is 2-benzaldehyde sulfonic acid sodium salt.

## Patentansprüche

1. Wasserlösliche Verpackungsfolie, bestehend im wesentlichen aus einem acetalisierten Produkt mit einem Acetalisierungsgrad von 1 bis 30 Mol-%, der sich durch Teilacetalisierung von Polyvinylalkohol mit einem Hydrolysegrad von nicht weniger als 90 Mol-% unter Verwendung eines Benzaldehydderivats der Formel (I) ergibt: 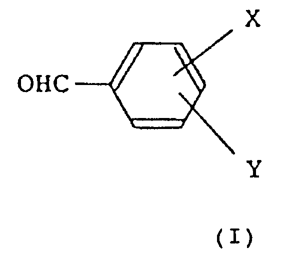 worin X eine Sulfonsäuregruppe oder eine Sulfonsäuresalzgruppe bedeutet und Y ausgewählt ist aus einem Wasserstoffatom, Sulfonsäuregruppen, Sulfonsäuresalzgruppen, einem Halogenatom, Alkylgruppen und Hydroxylgruppen.

2. Verpackungsfolie nach Anspruch 1, wobei das Benzaldehydderivat 2-Benzaldehydsulfonsäurenatriumsalz ist.

## Revendications

1. Film d'emballage hydrosoluble constitué essentiellement d'un produit acétalisé ayant un degré d'acétalisation de 1 à 30 % en moles provenant de l'acétalisation partielle du poly(alcool vinylique) ayant un degré d'hydrolyse ne dépassant pas 90% en moles en utilisant un dérivé benzaldéhyde de formule (I): 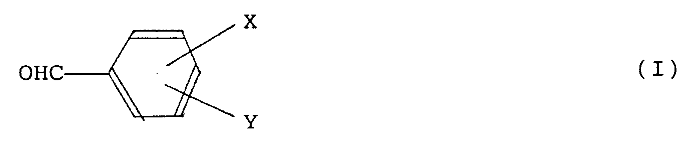 dans laquelle X est un groupe acide sulfonique ou un groupe acide sulfonique salifié et Y représente un élément choisi parmi un atome d'hydrogène, les groupes acide sulfonique, les groupes acide sulfonique salifié, un atome d'halogène, les groupes alkyle et les groupes hydroxy.

2. Film d'emballage selon la revendication 1, dans lequel le dérivé benzaldéhyde est le sel sodique de l'acide 2-benzaldéhyde sulfonique.
